# EUROPEAN PATENT APPLICATION

(11) **EP 4 787 084 A1**
(43) Date of publication of application: **05.08.2026**
(21) Application number: 24886243.5
(22) Date of filing: 30.10.2024
(51) Int. Cl.: G04G 9/00, G04B 19/04, G06F 1/16, G06F 3/0484

(54) **WEARABLE DEVICE AND METHOD FOR PROVIDING WATCH FACE**

(30) Priority: 31.10.2023 KR 20230148478; 11.12.2023 KR 20230178862
(71) Applicant: Samsung Electronics Co., Ltd., Suwon-si, Gyeonggi-do 16677 (KR)
(72) Inventor: LEE, Heonwoo, Suwon-si, Gyeonggi-do 16677 (KR)
(74) Representative: Nederlandsch Octrooibureau
(86) International application number: PCT/KR2024/016784
(87) International publication number: WO 2025/095570

(57) **Abstract**

The method for providing a watch face, of the present disclosure, may include the operations of: selecting a photo on the basis of a user input; generating, on the basis of the selected photo, a user interface including at least one of a layout, a color, at least one complication, or an emoji; and providing a watch face on the basis of the selected photo and the user interface.

## Description

### [Technical Field]

The disclosure relates to a wearable device and a method for providing a watch face.

### [Background Art]

With the advancement of digital technology, various types of electronic devices, such as wearable devices, mobile communication terminals, personal digital assistants (PDAs), electronic organizers, smartphones, tablet PCs, and/or laptop PCs, are becoming widely used. To support and enhance functions, the hardware and/or software components of these electronic devices are continuously improved.

Recently, electronic devices are becoming increasingly smaller and slimmer, making them easier to carry. These electronic devices are typically carried in a pocket or hand for on-the-go use, but they may also be worn on body parts or various structures. For example, wearable electronic devices, which are in wearable types, may typically include a body (e.g., a housing) including components (e.g., a processor, a display module, a communication module, and/or a memory) for performing the functions of an electronic device, and a wearing part (e.g., a strap) disposed to extend a predetermined length from the body to securely mount the electronic device to a body part or various structures.

The above-described information may be provided as background technology (related art) to aid in understanding the disclosure. No claim or determination is made as to whether any of the above is applicable as prior art related to the disclosure.

### [Disclosure of Invention]

### [Technical Problem]

The disclosure is to provide a wearable device and a user interface providing method, by which a watch face including a user interface can be provided by simple selecting of a photo by a user.

The disclosure is to provide a wearable device and a user interface providing method, capable of providing a watch face in which images and user interfaces may be changed in real time based on usage data of a wearable device and external data.

### [Solution to Problem]

The method of providing a watch face of the disclosure may include selecting a photo based on a user input.

The method of providing a watch face of the disclosure may include generating, based on the selected photo, a user interface including one or more of a layout, a color, one or more complications, or an emoji.

The method of providing a watch face of the disclosure may include providing a watch face based on the selected photo and the user interface.

The wearable device of the disclosure may include at least one processor.

The wearable device of the disclosure may include a display.

The wearable device of the disclosure may include a sensor module. The wearable device of the disclosure may include a memory.

The instructions of the disclosure, when individually or collectively executed by the at least one processor, may be configured to cause the wearable device to select a photo based on a user input.

The instructions of the disclosure, when individually or collectively executed by the at least one processor, may be configured to cause the wearable device to generate, based on the selected photo, a user interface including one or more of a layout, a color, one or more complications, or an emoji.

The instructions of the disclosure, when individually or collectively executed by the at least one processor, may be configured to cause the wearable device to provide a watch face based on the selected photo and the user interface.

The wearable device and user interface providing method of the disclosure may facilitate the user's watch face configuration by providing a watch face including a user interface only by selecting a photo by the user on a wearable device using a relatively small screen.

The wearable device and user interface providing method of the disclosure may provide a watch face in which images and user interfaces may be changed in real time based on usage data of the wearable device and external data, thereby providing diverse user experiences.

### [Brief Description of Drawings]

In connection with the description of the drawings, the same or similar reference numerals may be used for the same or similar components.
FIG. 1 is a block diagram of an electronic device within a network environment according to various embodiments of the disclosure.
FIG. 2 is a view illustrating a wearable device according to an embodiment of the disclosure.
FIG. 3 is a flow chart illustrating a method for providing a watch face of a wearable device according to an embodiment of the disclosure.
FIG. 4 is a flow chart illustrating a method for providing a watch face of a wearable device according to an embodiment of the disclosure.
FIG. 5 is a flow chart illustrating a method for providing a watch face of a wearable device according to an embodiment of the disclosure.
FIG. 6 is a flow chart illustrating a method for providing a watch face of a wearable device according to an embodiment of the disclosure.
FIG. 7 is a view illustrating a watch face configuration method of a wearable device 200 according to an embodiment of the disclosure.
FIG. 8 is a view illustrating a watch face providing method of FIG. 5 according to an embodiment of the disclosure.
FIG. 9 is a view illustrating a watch face providing method of FIG. 5 according to an embodiment of the disclosure.
FIG. 10 is a view illustrating a watch face providing method of FIG. 5 according to an embodiment of the disclosure.
FIG. 11 is a view illustrating a watch face providing method of FIG. 6 according to an embodiment of the disclosure.
FIG. 12 is a view illustrating a watch face providing method by the wearable device of FIG. 4 according to an embodiment of the disclosure.

### [Mode for the Invention]

Hereinafter, embodiments of the disclosure will be described in detail with reference to the drawings so that those skilled in the art may easily implement the same. However, the disclosure may be embodied in various different forms and is not limited to the embodiments described herein. With regard to the description of the drawings, the same or similar reference numerals may be used for the same or similar components. In addition, in the drawings and related descriptions, descriptions of well-known functions and configurations may be omitted for clarity and brevity.

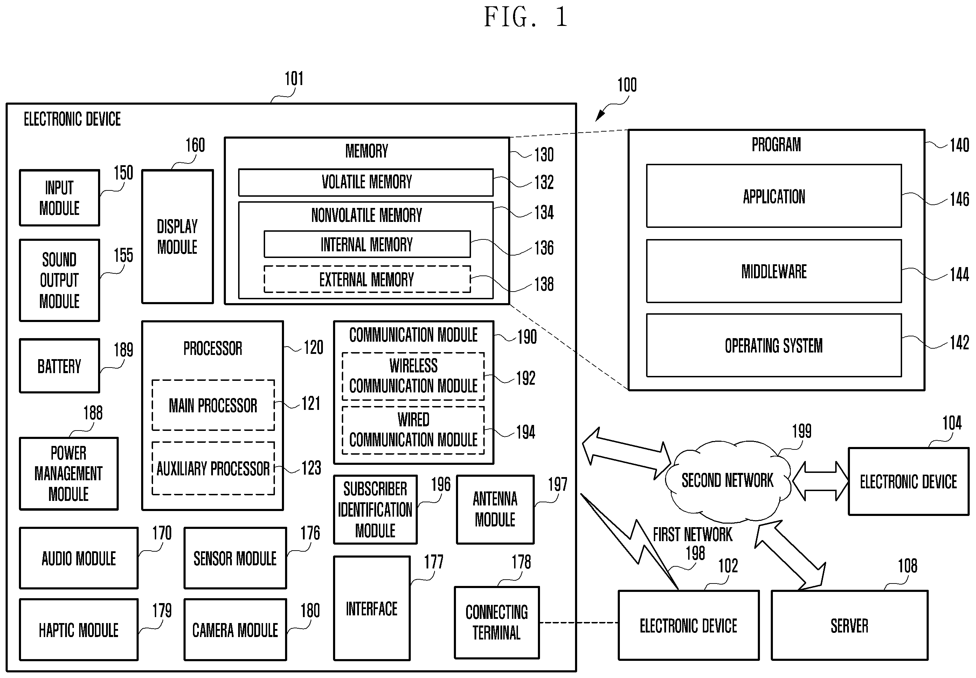

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

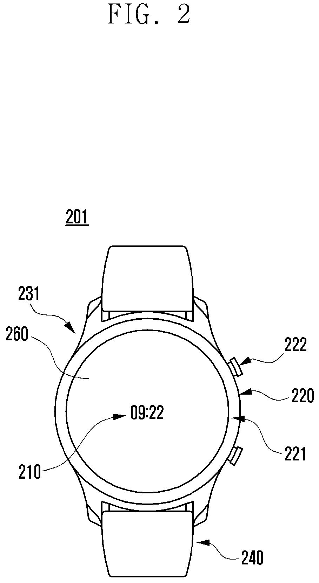

FIG. 2 is a view illustrating a wearable device 201 according to an embodiment of the disclosure.

In an embodiment, the wearable device 201 of FIG. 2 may be the same as or similar to the components of the electronic device 101 of FIG. 1. However, this is not limitative, and the wearable device 201 of FIG. 2 may include additional components or exclude some components as compared to the electronic device 101 of FIG. 1.

In an embodiment, the wearable device 201 may include a display 260 (e.g., the display module 160 of FIG. 1) on the first surface or front surface 231. The wearable device 201 may be a wearable device in the form of a watch that is wearable by a user. The wearable device 201 may display a watch face 210 on at least a portion of the display 260. The watch face 210 is a screen displayed on the display 260 of the wearable device 201together with the time. The watch face 210 may be the screen that the user sees first when looking at the wearable device 201.

In an embodiment, the wearable device 201 may include a case 220 and a band 240.

In an embodiment, the case 220 may include a bezel 221, a crown 222, and the display 260 on the outside. Referring to FIG. 1, the case 220 may include a processor 120, a memory 130, an input module 150, an audio output module 155, a display module 160, an audio module 170, a sensor module 176, an interface 177, a connection terminal 178, a haptic module 179, a camera module 180, a power management module 188, a battery 189, a communication module 190, a subscriber identification module 196, and/or an antenna module 197 internally or externally.

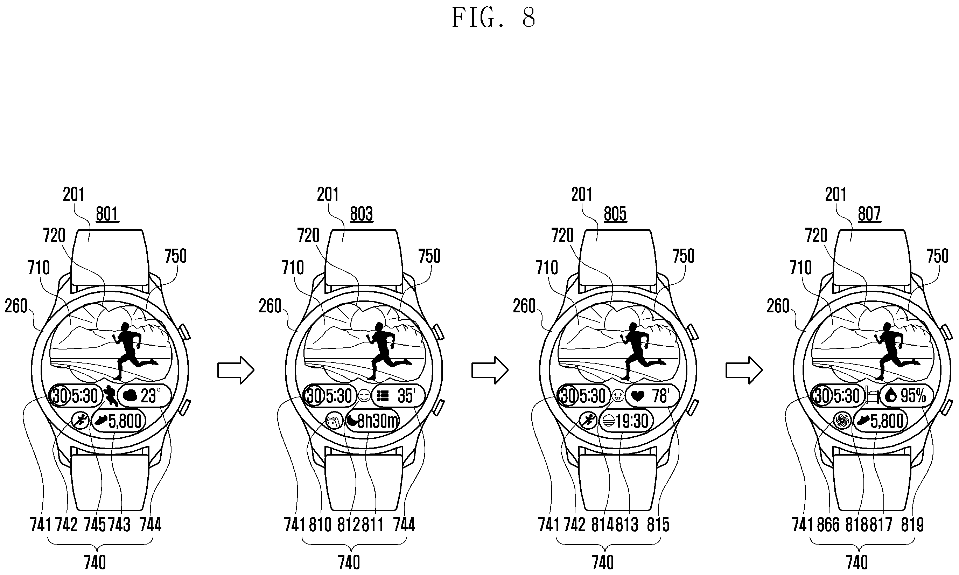

In an embodiment, the display 260 may be disposed on the first surface 231 of the case 220 and at least a portion of the sensor circuit may be exposed to the outside on the second surface (e.g., the second surface 232 in FIGS. 8A to 8I) of the case 220.

In an embodiment, the second surface 232 of the case 220 may, when the electronic device 201 is worn by a user via the band 240, have at least a portion in contact with the user.

In an embodiment, the bezel 221 may have a ring shape that is a concentric circle with the circular display 260. The inner radius of the bezel 221 may be the same as the radius of the display 260. The bezel 221 may be disposed on a portion of the edge of the case 220 to protect the display 260 from external impacts.

In an embodiment, the bezel 221 may be rotated in at least one of clockwise and counter-clockwise directions. The bezel 221 may serve as an input device of the electronic device 201. When the bezel 221 rotates, the electronic device 201 may determine the speed and direction of the rotation of the bezel 221 as a user input and may control functions of the electronic device 201 in response to the user input.

In an embodiment, the crown 222 may be disposed to protrude from at least a portion of the case 220. The crown 222 may have a cylindrical shape. The crown 222 may be connected to the case 220 so as to rotate about the rotation axis. The crown 222 may be connected to the case 220 through a stem that provides a rotation axis and may be rotated.

In an embodiment, the crown 222 may function as an input device of the electronic device 201. When the crown 222 rotates, the electronic device 201 may determine the speed and direction of the rotation of the crown 222 as a user input, and control the functions of the electronic device 201 in response to the user input.

In an embodiment, the band 240 may allow the electronic device 201 to be seated on the user's wrist. The band 240 may be made of various materials, such as metal, rubber, or leather. The band 240 may be connected to one end of the case 220 and the band 240 connected to the case 220 may be replaceable.

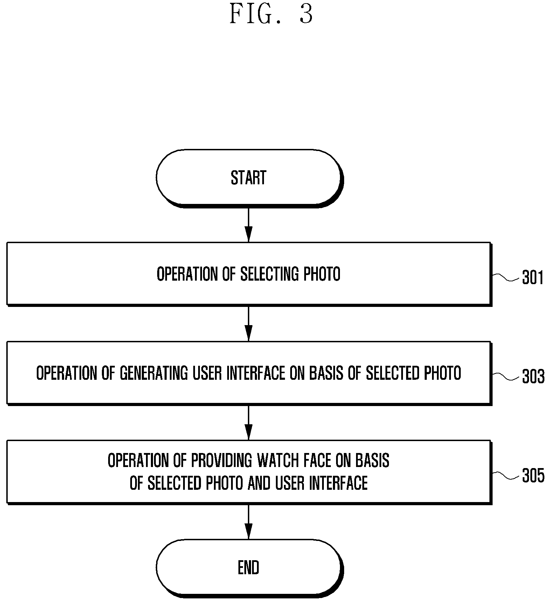

FIG. 3 is a flow chart illustrating a method for providing a watch face of a wearable device 201 according to an embodiment of the disclosure.

In an embodiment, a computer-readable recording medium may record software for executing commands to perform the method for providing a watch face of a wearable device 201 in FIG. 3. In an embodiment, the wearable device 201 may select a photo in operation 301 based on a user input, under the control of at least one processor 120 (the processor 120 in FIG. 1).

In an embodiment, in operation 301, the memory 130 stores instructions that, when individually or collectively executed by at least one processor 120, may cause the wearable device 201 to select a photo based on a user input.

In an embodiment, the wearable device 201 may store at least one photo in the memory 130 (the memory 130 of FIG. 1). When a user interface editing application is executed, the wearable device 201 may display at least one photo stored in the memory 130 on the display 260. One of the plurality of photos may be selected based on the user input. The at least one photo stored in the memory 130 may include a photo taken using a camera (e.g., the camera module 180 of FIG. 1) included in the wearable device 201. The at least one photo stored in the memory 130 may be a photo acquired through communication with an external electronic device (e.g., 102, 104) via the communication module (e.g., the communication module 190 of FIG. 1) of the wearable device 201. The at least one photo may include a photo and/or an image.

In an embodiment, in operation 303, the wearable device 201 may, under the control of at least one processor 120, generate a user interface based on the selected photo.

In an embodiment, in operation 303, the memory 130 stores instructions that, when individually or collectively executed by at least one processor 120, may cause the wearable device 201 to generate a user interface based on the selected photo.

In an embodiment, the user interface may include at least one of a layout, a color, complications, or an emoji.

In an embodiment, in operation 303, the wearable device 201 may, under the control of at least one processor 120, generate at least one of a layout, a color, complications, or an emoji, based on the object in the selected photo. In operation 303, the wearable device 201 may, under the control of at least one processor 120, select at least one of a layout, a color, complications, or an emoji, based on the object in the selected photo.

In an embodiment, in operation 303, the memory 130 stores instructions that, when individually or collectively executed by at least one processor 120, may cause the wearable device 201 to generate at least one of a layout, a color, complications, or an emoji, based on the object in the selected photo. The memory 130 stores instructions that, when individually or collectively executed by at least one processor 120, may cause the wearable device 201 to select at least one of a layout, a color, complications, or an emoji, based on the object in the selected photo.

For example, the complication may include a user interface related to the time of the wearable device 201 and a user interface related to information (e.g., weather information, biometric information) collected or stored in the wearable device 201. In horology, the complication may include internal and external components of a watch and/or the interface of the watch. In an embodiment, the complication may include internal and external components of the wearable device 201 and/or the user interface of the wearable device 201.

In an embodiment, in operation 303, the wearable device 201 may, under the control of at least one processor 120, identify an object in the selected photo and generate a layout based on the identified object. However, it is not limited thereto, and, in operation 303, the wearable device 201 may, under the control of at least one processor 120, identify an object in the selected photo and select at least one of a plurality of pre-stored layouts based on the identified object.

In an embodiment, the memory 130 stores instructions that, when individually or collectively executed by at least one processor 120, may cause the wearable device 201 to identify an object in the selected photo and generate a layout based on the identified object. The memory 130 stores instructions that, when individually or collectively executed by at least one processor 120, may cause the wearable device 201 to identify an object in the selected photo and select at least one of a plurality of pre-stored layouts based on the identified object.

In an embodiment, in operation 303, the wearable device 201 may, under the control of at least one processor 120, identify a subject object in the selected photo, edit (e.g., crop) the selected photo with the subject object as the center, and generate or select a layout based on the aspect ratio of the edited photo.

In an embodiment, in operation 303, the memory 130 stores instructions that, when individually or collectively executed by at least one processor 120, may cause the wearable device 201 to identify a subject object in the selected photo, edit (e.g., crop) the selected photo with the subject object as the center, and generate or select a layout based on the aspect ratio of the edited photo.

In an embodiment, the wearable device 201 may identify an object in the selected photo by primarily classifying objects as a person, an animal, food, landscape (background, nature), or other objects. In this case, the wearable device 201 may identify an object in the selected photo by secondarily classifying the objects related to the person into objects related to face/expression or exercise/posture. In addition, the wearable device 201 may identify an object in the selected photo by secondarily classifying objects related to the landscape (background, nature) into objects related to a building, nature, or a person.

For example, when the selected photo includes an object such as a person, an animal, food, or a building, in operation 303, the wearable device 201 may, under the control of at least one processor 120, edit (e.g., crop) the selected photo with the object, such as a person, an animal, food, or a building, as the center, and generate or select a layout based on the aspect ratio of the edited photo. Alternatively, when the selected photo includes an object such as nature or landscape, in operation 303, the wearable device 201 may, under the control of at least one processor 120, edit (e.g., crop) the selected photo with the object, such as nature or landscape, as the center, and generate or select a layout based on the aspect ratio of the edited photo. In this case, when a person is included in the nature or landscape photo, in operation 303, the wearable device 201 may, under the control of at least one processor 120, generate or select a layout including the person. In an embodiment, in operation 303, the wearable device 201 may, under the control of at least one processor 120, identify an object in the selected photo, identify a subject object in the selected photo, edit (e.g., crop) the selected photo with the subject object as the center, and generate or select a layout based on the aspect ratio of the edited photo.

In an embodiment, in operation 303, the memory 130 stores instructions that, when individually or collectively executed by at least one processor 120, may cause the wearable device 201 to identify an object in the selected photo, identify a subject object in the selected photo, edit (e.g., crop) the selected photo with the subject object as the center, and generate or select a layout based on the aspect ratio of the edited photo.

In an embodiment, in operation 303, the wearable device 201 may, under the control of at least one processor 120, identify the ratio of colors occupied in the selected photo.

In an embodiment, in operation 303, the memory 130 stores instructions that, when individually or collectively executed by at least one processor 120, may cause the wearable device 201 to identify the ratio of colors occupied in the selected photo.

In an embodiment, in operation 303, the wearable device 201 may, under the control of at least one processor 120, select at least one color in the order of decreasing ratio among the colors occupied in the selected photo.

In an embodiment, in operation 303, the memory 130 stores instructions that, when individually or collectively executed by at least one processor 120, may cause the wearable device 201 to select at least one color in the order of decreasing ratio among the colors occupied in the selected photo.

For example, if the colors occupied in the selected photo are 50% red, 30% green, 10% white, and 5% black, in operation 303, the wearable device 201 may select red under the control of the processor 120.

However, it is not limited thereto, and in operation 303, the wearable device 201 may, under the control of at least one processor 120, select multiple colors in the order of decreasing ratio.

In an embodiment, in operation 303, the wearable device 201 may, under the control of at least one processor 120, generate or select at least two (e.g., five) complications based on the object identified in the selected photo and the selected color.

In an embodiment, the placement of complications may be determined when a layout is selected.

In an embodiment, the complications may include a function and/or data displayed together with the time on the watch face.

In an embodiment, in operation 303, the wearable device 201 may, under the control of at least one processor 120, select complications related to an application, biometric information, health, exercise, weather, and location based on the object identified in the selected photo.

In an embodiment, in operation 303, the memory 130 stores instructions that, when individually or collectively executed by at least one processor 120, may cause the wearable device 201 to select complications related to an application, biometric information, health, exercise, weather, and location based on the object identified in the selected photo.

In an embodiment, in operation 303, the wearable device 201 may, under the control of at least one processor 120, select at least three complications among the complications related to an application, biometric information, health, exercise, weather, and location based on the object identified in the selected photo.

In an embodiment, in operation 303, the memory 130 stores instructions that, when individually or collectively executed by at least one processor 120, may cause the wearable device 201 to select at least three complications among the complications related to an application, biometric information, health, exercise, weather, and location based on the object identified in the selected photo.

For example, when the selected photo includes an object related to exercise, in operation 303, the wearable device 201 may, under the control of at least one processor 120, select complications related to health, exercise, and weather.

Table 1 may represent a method in which the wearable device 201 identifies an object in the selected photo and selects complications and emojis according to the identified object.

**[Table 1]**

| Primary object classification | Secondary object classification | First complication | Second complication | Third complication | Emoji |
|---|---|---|---|---|---|
| Person | Face/expr ession | Photo-related complication e.g.) Camera controller | Self-care-related complication e.g.) Body composition | Weather or health-related complication | Emoji resembling face/expression |
| | Exercise/ motion | Exercise shortcut-related complication e.g.) Swimming shortcut | Health-related application e.g.) Calories | Weather or health-related complication e.g.) Heart rate | Emoji corresponding to exercise/motion |
| Animal | - | Animal schedule-related complication e.g.) Reminder | Apply complications most frequently used by user | | Emoji corresponding to animal |
| Food | - | Food-related complication e.g.) Calories | | | Emoji corresponding to food e.g.) Apple |
| Background | Building | Photo-related complication e.g.) Camera controller | Travel-related complication e.g.) Weather, perceived temperature, precipitation probability | | Emoji corresponding to famous building |
| | Nature(la ndscape) | Photo-related complication e.g.) Camera controller | Weather-related complication e.g.) Weather, perceived temperature, precipitation probability | Outdoor-related complication e.g.) Sunrise/sunset, compass | Emoji corresponding to landscape |
| | Nature (still life) | Photo-related complication e.g.) Camera controller | Apply complications most frequently used by user | | Emoji corresponding to still life, such as flower and plant |
| | Nature + person | Exercise shortcut-related complication e.g.) Yoga shortcut | Terrain-related complication e.g.) elevation, compass | Weather-related complication e.g.) Weather, precipitation probability, UV index, weather forecast | Emoji corresponding to character and background |
| Other objects | - | Apply the most frequently used complications | | | Apply random emojis |

Referring to Table 1, for example, if the selected photo includes an object related to face/expression, the wearable device 201 may, under the control of at least one processor 120, determine that the user is interested in selfies or photos and select a complication related to the camera controller or the gallery.

For example, if the selected photo includes an object related to exercise/motion, the wearable device 201 may, under the control of at least one processor 120, determine that the user is interested in exercise and select a complication related to exercise or health.

For example, if the selected photo includes an object related to an animal or food, the wearable device 201 may, under the control of at least one processor 120, select a complication related to a schedule for the animal or a calorie complication related to food.

For example, if the selected photo includes an object related to a building or landscape, the wearable device 201 may, under the control of at least one processor 120, determine that the user likes traveling or photography and select a complication related to a camera controller or travel.

For example, if the selected photo includes an object related to still life, the wearable device 201 may, under the control of at least one processor 120, determine that the user likes photography and select a complication related to a camera controller.

In an embodiment, in operation 303, the wearable device 201 may, under the control of at least one processor 120, apply a color to the selected complications, based on the object identified in the selected photo. For example, if red, green, and white are selected in order of ratio among the colors occupied in the selected photo, the selected colors may be applied to the selected complications. In this case, the application may be applied randomly.

In an embodiment, in operation 303, the memory 130 stores instructions that, when individually or collectively executed by at least one processor 120, may cause the wearable device 201 to apply colors to selected complications based on the object identified in the selected photo.

In an embodiment, in operation 303, the wearable device 201 may, under the control of at least one processor 120, generate or select at least one emoji, based on the object identified and the selected color in the selected photo.

In an embodiment, in operation 303, the memory 130 stores instructions that, when individually or collectively executed by at least one processor 120, may cause the wearable device 201 to generate or select at least one emoji, based on the object identified and the selected color in the selected photo.

Referring to Table 1, for example, if the selected photo includes an object related to a face or expression, the wearable device 201 may, under the control of the processor 120, select an emoji corresponding to the face or expression.

In an embodiment, the wearable device 201 may, under the control of the processor 120, use artificial intelligence (AI) or generative AI to generate a user interface based on a selected photo.

In an embodiment, the wearable device 201 may store artificial intelligence (AI) or generative AI in the memory 130 or the processor 120.

In an embodiment, in operation 305, the wearable device 201 may, under the control of at least one processor 120, provide a watch face based on the selected photo and the generated user interface.

In an embodiment, in operation 305, the memory 130 stores instructions that, when individually or collectively executed by at least one processor 120, may cause the wearable device 201 to provide a watch face based on the selected photo and the generated user interface.

In an embodiment, in operation 305, the wearable device 201 may, under the control of at least one processor 120, generate a watch face based on the selected photo and the generated user interface and display the same on the display 260.

In an embodiment, in operation 305, the memory 130 stores instructions that, when individually or collectively executed by at least one processor 120, may cause the wearable device 201 to generate a watch face based on the selected photo and the generated user interface and display the same on the display 260.

In an embodiment, the watch face may include at least one of a selected photo, a layout, a color, complications, or an emoji.

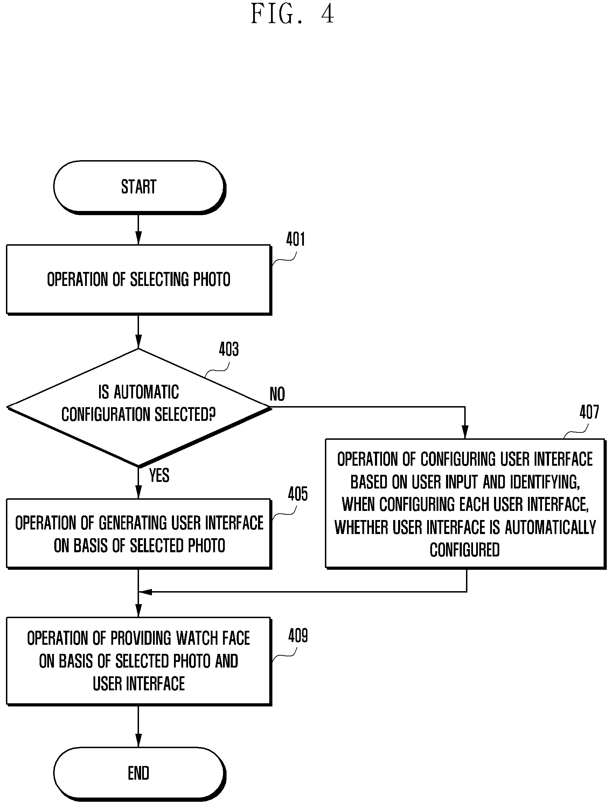

FIG. 4 is a flow chart illustrating a method for providing a watch face of a wearable device 201 according to an embodiment of the disclosure.

In an embodiment, a computer-readable recording medium may record software for executing commands that enable the wearable device 201 of FIG. 4 to perform a watch face providing method.

In an embodiment, in operation 401, the wearable device 201 may, under the control of at least one processor 120, select a photo according to a user input. Operation 401 in FIG. 4 may be the same as operation 301 in FIG. 3.

In an embodiment, in operation 401, the memory 130 stores instructions that, when individually or collectively executed by at least one processor 120, may cause the wearable device 201 to select a photo according to a user input.

In an embodiment, in operation 403, the wearable device 201 may, under the control of at least one processor 120, identify whether to perform automatic configuration. Automatic configuration may be an operation in which, without user intervention, the wearable device 201 may, under the control of at least one processor 120, provides a watch face. Manual configuration may be an operation in which the wearable device 201 provides a watch face that has been selected or generated based on a user input.

In an embodiment, in operation 403, the memory 130 stores instructions that, when individually or collectively executed by at least one processor 120, may cause the wearable device 201 to identify whether to perform automatic configuration.

If the automatic configuration is selected based on the user input, the wearable device 201 may branch to operation 405 from operation 403.

If the automatic configuration is not selected based on the user input, the wearable device 201 may branch from operation 403 to operation 407. However, this is not limited thereto, and in case that a manual configuration is selected based on a user input, the wearable device 201 may branch to operation 407 from operation 403.

The wearable device 201 may display a user interface on the display 260 to identify whether the automatic configuration is enabled. In this case, in operation 403, the wearable device 201 may, under the control of at least one processor 120, identify whether to perform automatic configuration, based on a touch input (or user input) regarding the user interface for identifying whether to perform automatic configuration.

In an embodiment, in operation 405, the wearable device 201 may, under the control of at least one processor 120, generate a user interface based on the selected photo. Operation 405 in FIG. 4 may be the same as operation 303 in FIG. 3.

In an embodiment, in operation 405, the memory 130 stores instructions that, when individually or collectively executed by at least one processor 120, may cause the wearable device 201 to generate a user interface based on the selected photo.

In an embodiment, in operation 407, the wearable device 201 may, under the control of at least one processor 120, configure a user interface based on a user input and identify whether to perform automatic configuration each time a user interface is configured.

In an embodiment, in operation 407, the memory 130 stores instructions that, when individually or collectively executed by at least one processor 120, may cause the wearable device 201 to configure a user interface based on a user input and identify whether to perform automatic configuration each time a user interface is configured.

For example, the user interface may include at least one of a layout, a color, complications, or an emoji.

In an embodiment, in operation 407, the wearable device 201 may, under the control of at least one processor 120, identify whether to perform automatic configuration if a layout is configured based on a user input. When automatic configuration is selected based on the user input, the wearable device 201 may, under the control of at least one processor 120, automatically configure at least one of a color, complications, or an emoji without user intervention, as in operation 303 of FIG. 3. When manual configuration is selected, the wearable device 201 may, under the control of at least one processor 120, automatically configure at least one of a color, complications, or an emoji based on a user input.

In an embodiment, in operation 407, the memory 130 stores instructions that, when individually or collectively executed by at least one processor 120, may cause the wearable device 201 to identify whether to perform automatic configuration if a layout is configured based on a user input.

In an embodiment, in operation 407, the wearable device 201 may, under the control of at least one processor 120, identify whether to perform automatic configuration if a layout and a color are configured based on a user input. When automatic configuration is selected based on the user input, the wearable device 201 may, under the control of at least one processor 120, automatically configure at least one of complications or an emoji without user intervention, as in operation 303 of FIG. 3. When manual configuration is selected, the wearable device 201 may, under the control of at least one processor 120, automatically configure at least one of complications or an emoji based on a user input.

In an embodiment, in operation 407, the memory 130 stores instructions that, when individually or collectively executed by at least one processor 120, may cause the wearable device 201 to identify whether to perform automatic configuration if a layout and a color are configured based on a user input.

In an embodiment, in operation 407, the wearable device 201 may, under the control of at least one processor 120, identify whether to perform automatic configuration if a layout, a color, and complications are configured based on a user input. When automatic configuration is selected based on the user input, the wearable device 201 may, under the control of at least one processor 120, automatically configure at least one of emojis without user intervention, as in operation 303 of FIG. 3.

In an embodiment, in operation 407, the memory 130 stores instructions that, when individually or collectively executed by at least one processor 120, may cause the wearable device 201 to identify whether to perform automatic configuration if a layout, a color, and complications are configured based on a user input.

In an embodiment, in operation 409, the wearable device 201 may, under the control of at least one processor 120, provide a watch face based on the selected photo and user interface.

In an embodiment, in operation 409, the memory 130 stores instructions that, when individually or collectively executed by at least one processor 120, may cause the wearable device 201 to provide a watch face based on the selected photo and user interface.

In an embodiment, in operation 409, the wearable device 201 may, under the control of at least one processor 120, provide a watch face based on the selected photo and the generated user interface and display the same on the display 260.

In an embodiment, in operation 409, the memory 130 stores instructions that, when individually or collectively executed by at least one processor 120, may cause the wearable device 201 to provide a watch face based on the selected photo and the generated user interface and display the same on the display 260.

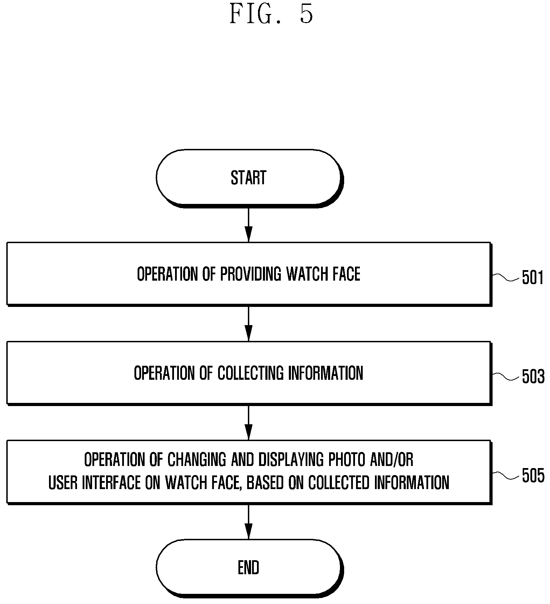

FIG. 5 is a flow chart illustrating a method for providing a watch face of a wearable device 201 according to an embodiment of the disclosure.

In an embodiment, a computer-readable recording medium may record software for executing commands that enable the wearable device 201 of FIG. 5 to perform a watch face providing method.

In an embodiment, in operation 501, the wearable device 201 may, under the control of at least one processor 120, provide a watch face on the display 260.

In an embodiment, in operation 501, the memory 130 stores instructions that, when individually or collectively executed by at least one processor 120, may cause the wearable device 201 to provide a watch face on the display 260.

In an embodiment, in operation 501, the wearable device 201 may, under the control of at least one processor 120, display a watch face on the display 260. The watch face displayed on the display 260 may be selected or generated by the photo selected in FIG. 3 or FIG. 4 and a user interface.

In an embodiment, in operation 501, the memory 130 stores instructions that, when individually or collectively executed by at least one processor 120, may cause the wearable device 201 to display a watch face on the display 260.

In an embodiment, in operation 503, the wearable device 201 may, under the control of at least one processor 120, collect information. The information collected by the wearable device 201 may include at least one of information on the user's state, biometric information of the user, location information of the wearable device 201, time information, or information on the user's behavior patterns.

In an embodiment, in operation 503, the memory 130 stores instructions that, when individually or collectively executed by at least one processor 120, may cause the wearable device 201 to collect information.

For example, information on the user's state may include information on the user's health (e.g., oxygen saturation, heart rate) collected through a sensor module of the wearable device 201. Information on the user's behavioral patterns may include information on the user's activities such as sleep, waking, and exercise, collected through the sensor module of the wearable device 201.

In an embodiment, in operation 505, the wearable device 201 may, under the control of at least one processor 120, change and display a photo and/or a user interface on the watch face, based on collected information.

In an embodiment, in operation 505, the memory 130 stores instructions that, when individually or collectively executed by at least one processor 120, may cause the wearable device 201 to change and display a photo and/or a user interface on the watch face, based on collected information.

For example, the wearable device 201 may, under the control of at least one processor 120, control the expression of a person in a photo to be changed, based on collected information. The wearable device 201 may, under the control of the processor 120, control the building in the background of the photo to be changed, based on the collected information. The wearable device 201 may, under the control of at least one processor 120, control the weather in the background of the photo to be changed, based on the collected information.

For example, the wearable device 201 may, under the control of at least one processor 120, change the compliances based on collected information.

For example, the wearable device 201 may, under the control of at least one processor 120, display a complication related to exercise when the user's behavioral pattern reaches a time zone during which the user frequently exercises.

For example, when a photo is changed, the wearable device 201 may, under the control of at least one processor 120, change and display the colors of the complications based on the colors included in the photo.

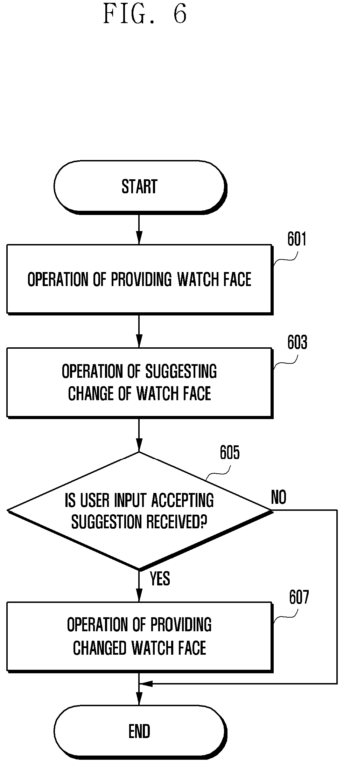

FIG. 6 is a flow chart illustrating a method for providing a watch face of a wearable device 201 according to an embodiment of the disclosure.

In an embodiment, a computer-readable recording medium may record software for executing commands that enable the wearable device 201 of FIG. 6 to perform a watch face providing method.

In an embodiment, in operation 601, the wearable device 201 may, under the control of at least one processor 120, provide a watch face on the display 260.

In an embodiment, in operation 601, the memory 130 stores instructions that, when individually or collectively executed by at least one processor 120, may cause the wearable device 201 to provide a watch face on the display 260.

In an embodiment, in operation 601, the wearable device 201 may, under the control of at least one processor 120, display a watch face on the display 260. The watch face displayed on the display 260 may be selected or generated by the photo selected in FIG. 3 or FIG. 4 and a user interface.

In an embodiment, in operation 601, the memory 130 stores instructions that, when individually or collectively executed by at least one processor 120, may cause the wearable device 201 to display a watch face on the display 260.

In an embodiment, in operation 603, the wearable device 201 may, under the control of at least one processor 120, suggest a change of the watch face.

In an embodiment, in operation 603, the memory 130 stores instructions that, when individually or collectively executed by at least one processor 120, may cause the wearable device 201 to suggest a change of the watch face.

In an embodiment, in operation 603, the wearable device 201 may, under the control of at least one processor 120, display a user interface regarding changing the watch face on the display 260.

In an embodiment, in operation 603, the memory 130 stores instructions that, when individually or collectively executed by at least one processor 120, may cause the wearable device 201 to display a user interface regarding changing the watch face on the display 260.

In an embodiment, in operation 603, the wearable device 201 may, under the control of at least one processor 120, suggest a change of the watch face when the same watch face is used for a predetermined period of time.

In an embodiment, in operation 603, the wearable device 201 may, under the control of at least one processor 120, display a user interface regarding changing the watch face on the display 260 when the same watch face is used for a predetermined period of time.

In an embodiment, in operation 603, the memory 130 stores instructions that, when individually or collectively executed by at least one processor 120, may cause the wearable device 201 to suggest a change of the watch face when the same watch face is used for a predetermined period of time.

In an embodiment, in operation 603, the memory 130 stores instructions that, when individually or collectively executed by at least one processor 120, may cause the wearable device 201 to display a user interface regarding changing the watch face on the display 260 when the same watch face is used for a predetermined period of time.

In an embodiment, in operation 605, the wearable device 201 may, under the control of at least one processor 120, determine whether a user input (e.g., a touch input) accepting a suggestion for a user interface regarding changing the watch face is received.

In an embodiment, in operation 605, the memory 130 stores instructions that, when individually or collectively executed by at least one processor 120, may cause the wearable device 201 to determine whether a user input (e.g., a touch input) accepting a suggestion for a user interface regarding changing the watch face is received.

If the user input (e.g., a touch input) accepting the suggestion is received, the wearable device 201 may branch to operation 607 from operation 605.

If the user input (e.g., a touch input) rejecting the suggestion is received, the wearable device 201 may maintain the configured watch face.

In an embodiment, in operation 607, the wearable device 201 may, under the control of at least one processor 120, provide a changed watch face. In an embodiment, in operation 607, the wearable device 201 may, under the control of the processor 120, provide the changed watch face by performing the watch face provision operation of FIG. 3 or FIG. 4.

In an embodiment, in operation 607, the memory 130 stores instructions that, when individually or collectively executed by at least one processor 120, may cause the wearable device 201 to provide the changed watch face.

In an embodiment, in operation 607, the wearable device 201 may, under the control of at least one processor 120, display at least one photo or image stored in the memory 130 on the display 260 to provide the changed watch face. If there is the user input (e.g., touch input) for at least one photo or image displayed on the display 260, in operation 607, the wearable device 201 may, under the control of at least one processor 120, provide the changed watch face based on at least one selected photo or image.

In an embodiment, in operation 607, the memory 130 stores instructions that, when individually or collectively executed by at least one processor 120, may cause the wearable device 201 to display at least one photo or image stored in the memory 130 on the display 260 to provide the changed watch face.

If there is the user input (e.g., touch input) for at least one photo or image displayed on the display 260, in an embodiment, in operation 607, the memory 130 stores instructions that, when individually or collectively executed by at least one processor 120, may cause the wearable device 201 to provide the changed watch face based on at least one selected photo or image.

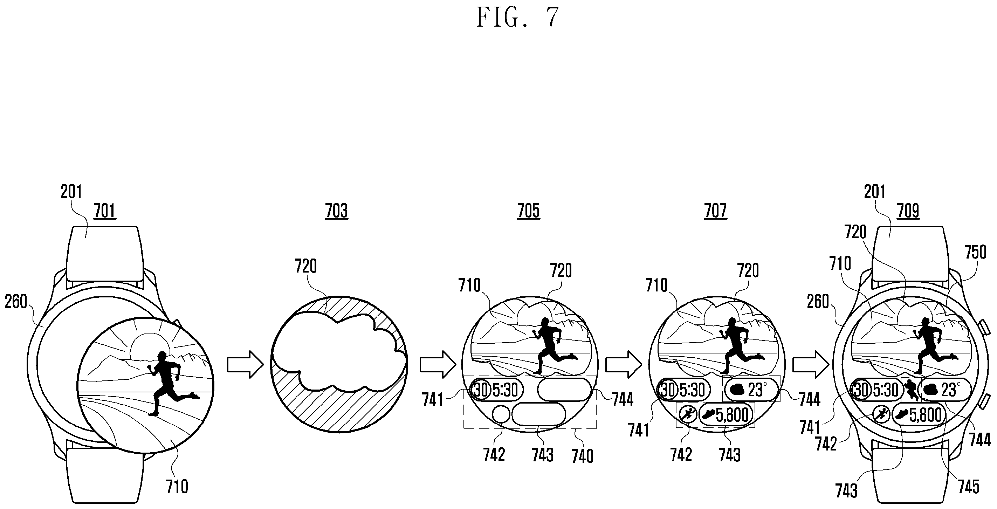

FIG. 7 is a view illustrating a watch face configuration method of a wearable device 200 according to an embodiment of the disclosure.

On screen 701, when a user interface editing application is executed, the wearable device 201 may display at least one photo stored in the memory 130 on the display 260.

On screen 701, the wearable device 201 may display a selected photo 710 on the display 201. For example, the selected photo 710 may include a person running on a track toward the rising sun.

On screen 703, the wearable device 201 may identify an object in the selected photo 710 and generate or select a layout 720.

On screen 703, the wearable device 201 may identify an object in the selected photo 710, identify a subject object in the selected photo, edit (e.g., crop) the selected photo 710 with the subject object as the center, and generate or select the layout 720 based on the aspect ratio of the edited photo. Referring to Table 1, since the selected photo 710 includes a person, the wearable device 201 may, under the control of the processor 120, select or generate a layout in which the person may be displayed.

On screen 705, the wearable device 201 may, under the control of at least one processor 120, select at least one color in the order of decreasing ratio of colors occupied in the selected photo 710.

For example, in the selected photo 710, if the colors occupied in the photo are 50% red, 30% green, 10% white, and 5% black, the wearable device 201 may, under the control of the processor 120, select the top three colors. The wearable device 201 may apply red, green, and white to the complications 741, 742, 743, and 744. In this case, the application may be applied randomly.

On screen 707, the wearable device 201 may, under the control of at least one processor 120, generate or select at least two (e.g., five) complications based on the object identified in the selected photo and the selected color. For example, the complications may include a clock complication 741, a complication related to an exercise application 742, a complication related to step count 743, and a complication related to weather 744. Since the selected photo 710 includes a photo of running outdoors as an object, the wearable device 201 may, under the control of at least one processor 120, select or generate complications related to running or exercise.

On screen 707, the wearable device 201 may, under the control of at least one processor 120, generate or select at least one emoji based on the object identified in the selected photo 710 and the selected color. Since the selected photo 710 includes a photo of running outdoors as an object, an emoji 745 corresponding to exercise or running may be displayed on the display 260. The layout 720, the complications 741, 742, 743, and 744, and the emoji 745 may constitute a watch face.

FIG. 8 is a view illustrating a watch face providing method of FIG. 5 according to an embodiment of the disclosure.

On screen 801, the wearable device 201 may, under the control of at least one processor 120, provide a watch face 750 on the display 260. The watch face 750 may include the selected photo 710, the layout 720, and the complication/emoji 740. The user interface may include the layout 720 and the complication/emoticon 740. The selected photo 710 may include a photo of running outdoors as an object. For example, the complications may include at least one of the clock complication 741, the complication related to an exercise application 742, the complication related to step count 743, the complication related to weather 744, or a complication related to heart rate.

On screen 803, the wearable device 201 may, under the control of at least one processor 120, collect information. The information collected by the wearable device 201 may include at least one of information on the user's state, location information of the wearable device 201, time information, or information on the user's behavior patterns.

On screen 803, if the time is in the morning based on information collected by the wearable device 201 and the user's state is waking up, the wearable device 201 may, under the control of at least one processor 120, change the complication/emoticon 740.

For example, the wearable device 201 may add and change a complication 810 regarding sleep score, a complication 811 regarding sleep time, and an emoji 812 on the watch face 750, based on collected information while maintaining the clock complication 741 and the weather complication 744.

On screen 805, if the time is in the afternoon based on information collected by the wearable device 201 and the user's behavior pattern is a scheduled exercise time, the wearable device 201 may, under the control of at least one processor 120, change the complication/emoticon 740.

For example, the wearable device 201 may, while maintaining the clock complication 741, add and change the complication related to an exercise application 742, a complication related to sunset time 813, a complication related to heart rate 815, and an emoji 814 on the watch face 750, based on the collected information.

On screen 807, if the time is in the evening based on information collected by the wearable device 201 and the user's behavior pattern is a scheduled exercise time, the wearable device 201 may, under the control of at least one processor 120, change the complication/emoticon 740.

For example, the wearable device 201 may, while maintaining the clock complication 741, add and change the complication related to step count 743, a complication related to sunset time 813, a complication related to respiration 816, a complication related to blood oxygen saturation, and an emoji 818 on the watch face 750, based on the collected information.

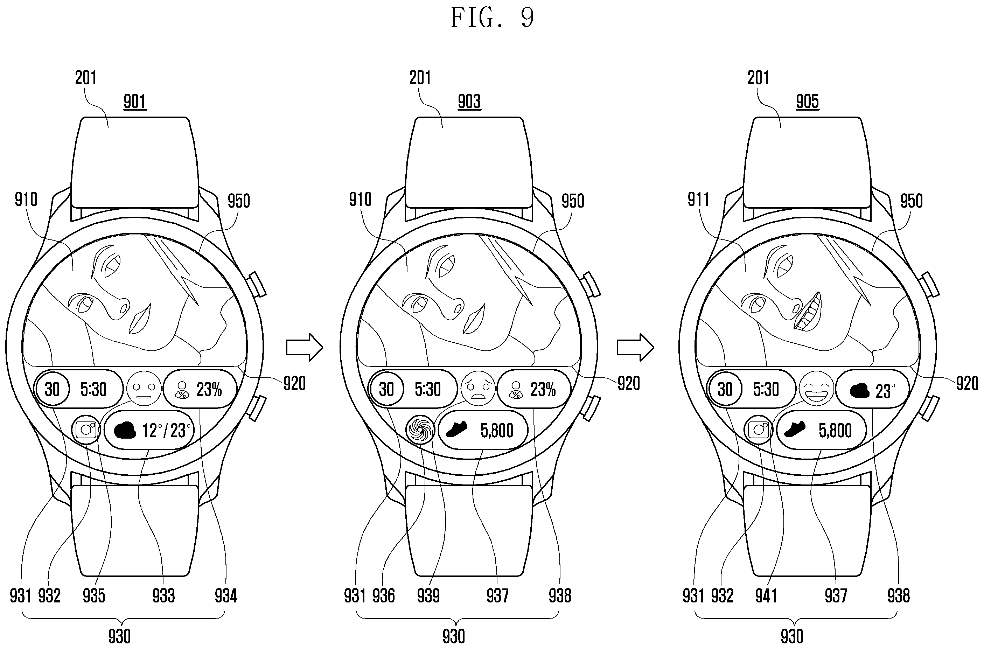

FIG. 9 is a view illustrating a watch face providing method of FIG. 5 according to an embodiment of the disclosure.

On screen 901, the wearable device 201 may, under the control of at least one processor 120, provide a watch face 950 on the display 260. The watch face 950 may include a selected photo 910, a layout 920, and a complication/emoji 930. The user interface may include the layout 920 and the complication/emoticon 930. The selected photo 910 may include a photo of a person. For example, the complications may include a clock complication 9311, a complication related to a photo application 932, a complication related to step count 933, and a complication related to weather 934. The user interface may include a straight face emoji 935. If the object in the selected photo 910 includes a facial shape, the wearable device 201 may, under the control of the processor 120, periodically acquire the user's stress information, change the object (or the facial expression), and display the same on the display 260. The user interface may include an emoji 935 indicating a straight face. If the object in the selected photo 910 includes a facial shape, the wearable device 201 may, under the control of at least one processor 120, periodically acquire the user's stress information, change the complications related to the stress information, and display the same on the display 260.

In an embodiment, stress information may be generated, for example, based on heart rate and oxygen saturation.

On screen 903, the wearable device 201 may, under the control of at least one processor 120, collect information. The information collected by the wearable device 201 may include at least one of information on the user's state, location information of the wearable device 201, time information, or information on the user's behavior patterns.

On screen 903, the user's state may be identified through information collected by the wearable device 201. For example, based on the respiration rate, heart rate, and blood oxygen saturation measured through a sensor module, the wearable device 201 may determine, under the control of at least one processor 120, that the user is in a stressed state.

On screen 903, if it is determined that the user's state is in a stressed state, the wearable device 201 may, under the control of at least one processor 120, change the photo 911 and the complication/emoticon 930. The photo 911 may be a photo in which the facial expression of the same person in the selected photo 910 is changed to a darkened expression. When generating the photo 911 from the selected photo 910, the wearable device 201 may use artificial intelligence (AI) and/or generative artificial intelligence (AI). AI and/or generative AI may be a program stored in the memory 130 of the wearable device 201. AI and/or generative AI may change an image by using information (e.g., information on the user's state, location information of the wearable device 201, time information, or user behavior patterns) collected by the wearable device 201 as an input (or a prompt). While maintaining the clock complication 931, the wearable device 201 may add and change a complication related to respiration 936, a complication related to step count 937, and a sad face emoji 939 to the watch face 950, based on the collected information. The wearable device 201 may change the photo 911 of the watch face 950 and the complication/emoji 930, thereby recognizing that the user is in a stressed state and helping to relieve the stress.

On screen 905, the user's state may be identified through information collected by the wearable device 201. For example, based on the respiration rate, heart rate, and blood oxygen saturation measured through a sensor module, the wearable device 201 may determine, under the control of at least one processor 120, that the user is in a state of stress relief.

On screen 903, if it is determined that the user's state is in a state of stress relief, the wearable device 201 may, under the control of at least one processor 120, change the photo 912 and the complication/emoticon 930. The photo 912 may be a photo in which the facial expression of the same person in the selected photo 910 is changed to a bright expression. When generating the photo 912 from the selected photo 910, the wearable device 201 may use AI and/or generative AI. While maintaining the clock complication 931, the wearable device 201 may add and change a complication related to camera application 932 and a bright face emoji 941 to the watch face 950, based on the collected information.

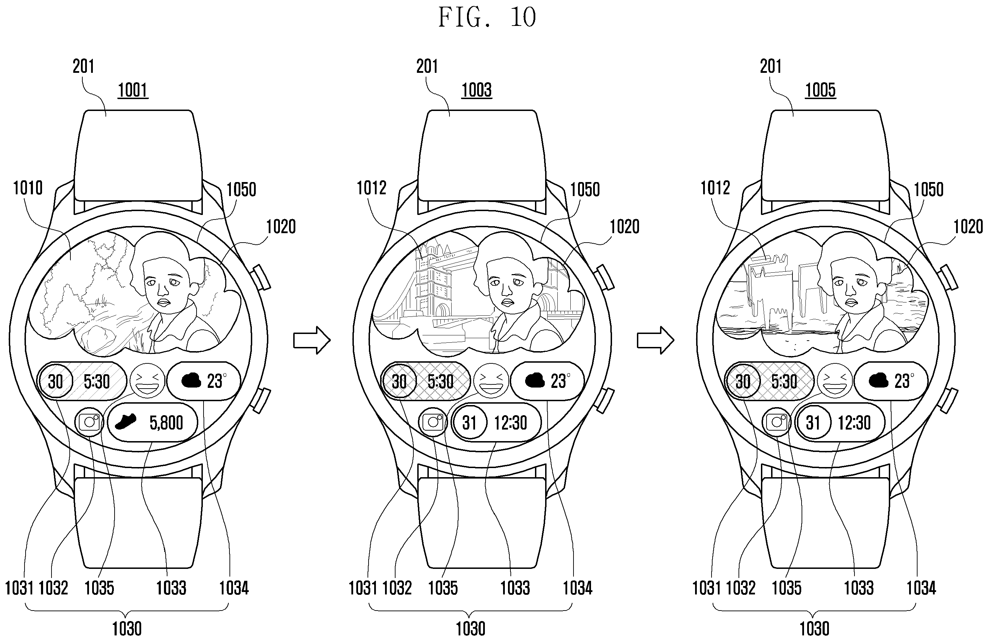

FIG. 10 is a view illustrating a watch face providing method of FIG. 5 according to an embodiment of the disclosure.

On screen 1001, the wearable device 201 may, under the control of at least one processor 120, provide a watch face 1050 on the display 260. The watch face 1050 may include a selected photo 1010, a layout 1020, and a complication/emoji 1030. The user interface may include the layout 1020 and the complication/emoticon 1030. The selected photo 1010 may include a photo of a person. For example, the complications may include a clock complication 1031, a complication related to a photo application 1032, a complication related to step count 1033, and a complication related to weather 1034. The user interface may include a bright face emoji 1035.

On screen 1003, the wearable device 201 may, under the control of at least one processor 120, collect information. The information collected by the wearable device 201 may include at least one of information on the user's state, location information of the wearable device 201, time information, or information on the user's behavior patterns.

On screen 1003, the location may be identified through information collected by the wearable device 201. For example, based on the location information, the wearable device 201 may, under the control of the processor 120, determine that the user is traveling in a famous tourist spot (e.g., Paris).

On screen 1003, when it is determined that the user is traveling in a tourist spot (e.g., Paris), the wearable device 201 may, under the control of at least one processor 120, change the photo 1011 and the complication/emoji 1030. The photo 1011 may be a photo with the same person and a changed background from the selected photo 1010. The photo 1011 may be a photo including a landmark (e.g., Tower Bridge) of a tourist spot (e.g., London) in the background. When generating the photo 1011 from the selected photo 1010, the wearable device 201 may use AI and/or generative AI. AI and/or generative AI may be a program stored in the memory 130 of the wearable device 201. AI and/or generative AI may be a program stored in the memory 130 of the wearable device 201. AI and/or generative AI may change an image by using information (e.g., information on the user's state, location information of the wearable device 201, time information, or user behavior patterns) collected by the wearable device 201 as an input (or a prompt). The wearable device 201 may add and change a complication 1036 related to the time of the travel spot on the watch face 1010. In this case, the wearable device 201 may sequentially rank colors with high occupancy rates based on the changed photo 1011 and apply colors within the determined ranks to the complications to change the colors of the complications.

On screen 1005, when it is determined that the user is traveling in a tourist spot (e.g., a theme park), the wearable device 201 may, under the control of at least one processor 120, change the photo 1011 and the complication/emoji 1030. The photo 1011 may be a photo with the same person and a changed background from the selected photo 1010. The photo 1011 may be a photo including a landmark (e.g., a theme park castle) of a tourist spot (e.g., a theme park) in the background. The wearable device 201 may add and change a complication 1036 related to the time of the travel spot on the watch face 1010. In this case, the wearable device 201 may sequentially rank colors with high occupancy rates based on the changed photo 1011 and apply colors within the determined ranks to the complications to change the colors of the complications.

When the selected photo 910 includes a person as an object, the wearable device 201, under the control of at least one processor 120, may periodically acquire location information of the wearable device 201 and display the object with a changed background on the display 260. When the selected photo 910 includes a person as an object, the wearable device 201, under the control of at least one processor 120, may periodically acquire location information of the user's wearable device 201 and display the object with a changed complication on the display 260 based on the background color.

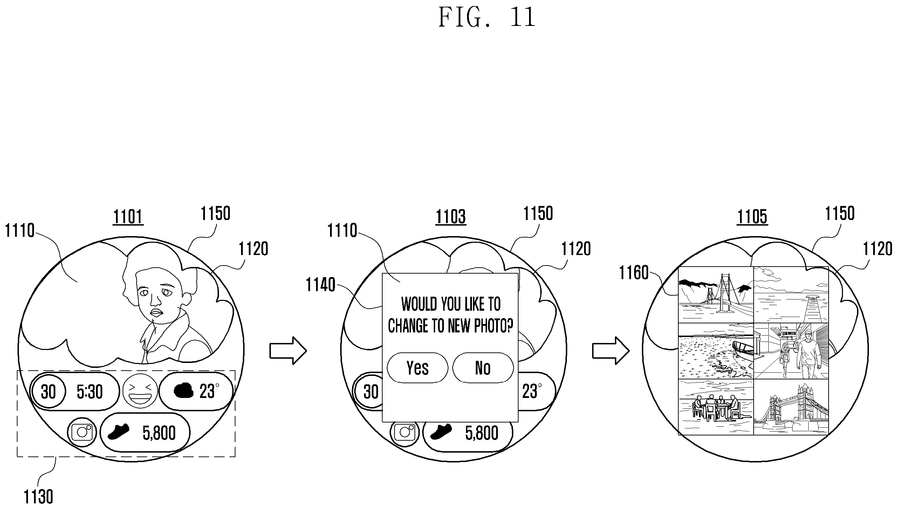

FIG. 11 is a view illustrating a watch face providing method of FIG. 6 according to an embodiment of the disclosure.

On screen 1101, the wearable device 201 may, under the control of at least one processor 120, provide a watch face 1150 on the display 260. The watch face 1150 may include a selected photo 1110, a layout 1120, and a complication/emoji 1130.

On screen 1103, the wearable device 201 may, under the control of at least one processor 120, suggest a change of the watch face 1150. The wearable device 201 may, under the control of at least one processor 120, display a user interface 1140 regarding the change of the watch face 1150 on the display 260. The wearable device 201 may, under the control of at least one processor 120, suggest a change of the watch face if the same watch face is used for a predetermined period of time.

On screen 1105, when a user input (e.g., a touch input) accepting the suggestion is received, the wearable device 201 may display at least one of the stored photos or images 1160 on the display 260 to provide the changed watch face. The changed watch face may be provided based on at least one selected photo or image 1160.

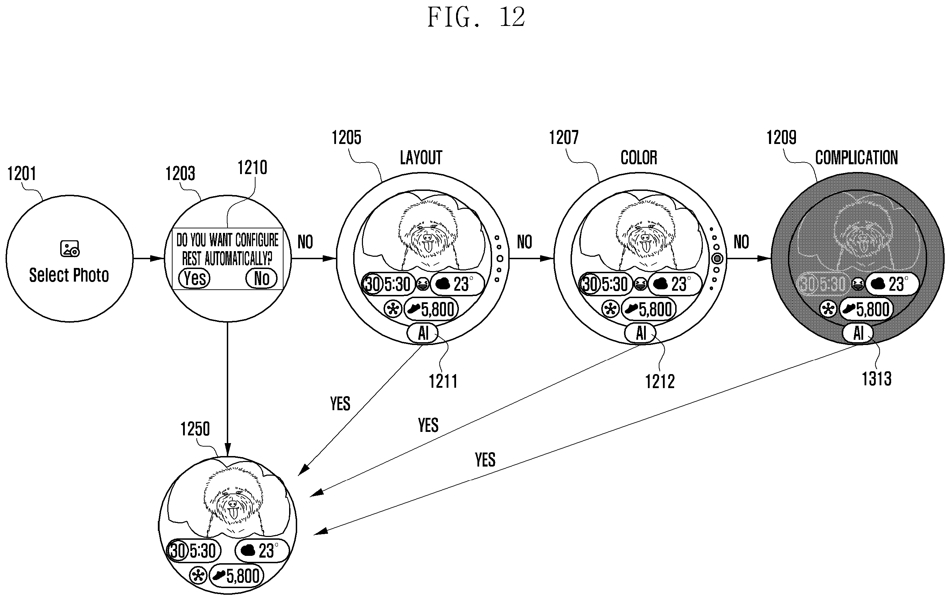

FIG. 12 is a view illustrating a watch face providing method by the wearable device of FIG. 4 according to an embodiment of the disclosure.

On screen 1201, the wearable device 201 may, under the control of at least one processor 120, select a photo according to a user input.

On screen 1203, the wearable device 201 may, under the control of at least one processor 120, identify whether to perform automatic configuration. Automatic configuration may be an operation in which, without user intervention, the wearable device 201 may, under the control of at least one processor 120, provides a watch face. To identify whether to perform automatic configuration, the wearable device 201 may, under the control of at least one processor 120, display a user interface 1210 regarding automatic configuration on the display. If the automatic configuration is selected based on the user input, the display may branch to screen 1211 from screen 1203. If the manual configuration is selected based on the user input, the display may branch to screen 1205 from screen 1203. Automatic configuration may be an operation in which, without user intervention, the wearable device 201 may, under the control of at least one processor 120, provides a watch face generated by artificial intelligence (AI) and/or generative AI. The wearable device 201 may, under the control of at least one processor 120, display an affordance interface on the display 260 to allow the user to perform operations of sequentially selecting a layout, selecting a color, selecting complications, and selecting an emoji based on the selected photo. Each selection operation may be performed by artificial intelligence (AI) according to the user's selection (e.g., an input for automatic configuration). Each selection operation may be performed by artificial intelligence (AI) according to the user's selection (e.g., an input for automatic configuration).

On screen 1205, the wearable device 201 may configure the layout based on the user input and identify again whether to perform automatic configuration. To identify whether to perform automatic configuration, the wearable device 201 may, under the control of at least one processor 120, display a user interface 1211 regarding automatic configuration on the display. If the automatic configuration is selected based on the user input, the display may branch to screen 1211 from screen 1205. After the layout is configured, if automatic configuration is selected, the wearable device 201 may, under the control of at least one processor 120, automatically configure a color, complications, or an emoji based on the selected photo. If the manual configuration is selected based on the user input, the display may branch to screen 1207 from screen 1205.

On screen 1207, the wearable device 201 may configure the color based on the user input and identify again whether to perform automatic configuration. To identify whether to perform automatic configuration, the wearable device 201 may, under the control of at least one processor 120, display a user interface 1212 regarding automatic configuration on the display 260. If the automatic configuration is selected based on the user input, the display may branch to screen 1211 from screen 1207. After the color is configured, if automatic configuration is selected, the wearable device 201 may, under the control of at least one processor 120, automatically configure complications or an emoji based on the selected photo. If the manual configuration is selected based on the user input, the display may branch to screen 1208 from screen 1207.

On screen 1209, the wearable device 201 may configure the complications based on the user input and identify again whether to perform automatic configuration. To identify whether to perform automatic configuration, the wearable device 201 may, under the control of at least one processor 120, display a user interface 1213 regarding automatic configuration on the display 260. If the automatic configuration is selected based on the user input, the display may branch to screen 1211 from screen 1208. After the complications are configured, if automatic configuration is selected, the wearable device 201 may, under the control of at least one processor 120, automatically configure an emoji based on the selected photo. If the manual configuration is selected based on the user input, the watch face 1150 may be generated after additionally configuring the emoji according to user input.

On screen 1211, the wearable device 201 may generate a watch face 1350 including the selected photo and the user interface.

In an embodiment, a method of providing a watch face may include selecting a photo based on a user input; generating, based on the selected photo, a user interface including one or more of a layout, a color, one or more complications, or an emoji; and providing a watch face based on the selected photo and the user interface.

In an embodiment, the generating a user interface based on the selected photo may include generating the layout based on an object included in the selected photo; determining the color of the one or more complications based on a color included in the selected photo; generating the one or more complications associated with the object included in the selected photo; and determining the emoji based on the object included in the selected photo.

In an embodiment, the one or more complications may include at least one of exercise, number of steps, or heart rate when the object included in the selected photo is in the form of a running person.

In an embodiment, when the object included in the selected photo is a face shape, the method of providing a watch face may include changing and displaying the object or changing and displaying the one or more complications based on periodically acquired stress information.

In an embodiment, when the object included in the selected photo is a face shape, the method of providing a watch face may include changing the background of the object based on periodically acquired location information or changing the one or more complications based on the background color when the object included in the selected photo is a face shape.

In an embodiment, the method of providing a watch face may include providing an affordance interface to a user to sequentially perform, based on the selected photo, selecting a layout, selecting a color, selecting the one or more complications, and selecting an emoji.

In an embodiment, each of the selecting operations may include an operation selected by artificial intelligence (AI) and/or generative AI, based on a user's selection.

In an embodiment, the method of providing a watch face may include determining whether a user input for automatically configuring the user interface is received; and providing a watch face based on the selected photo and the user interface when the user input for automatically configuring the user interface is received.

In an embodiment, the method of providing a watch face may include determining whether a user input for manually configuring the user interface is received; and configuring the user interfaces based on the user input when the user input for manually configuring the user interface is received, and identifying, when configuring each user interface, whether the user interface is automatically configured.

In an embodiment, the method of providing a watch face may include collecting information; and changing and displaying the selected photo and/or the user interface on the watch face based on the collected information.

In an embodiment, the information may include weather information and biometric information.

In an embodiment, the method of providing a watch face may include suggesting a change of the watch face; providing a changed watch face when there is a user input accepting the suggestion; and generating the changed watch face based on the photo selected by a user input.

In an embodiment, the wearable device 201 includes the processor 120; the memory 130 storing instructions; the display 260; and the instructions, when individually or collectively executed by the at least one processor 120, may be configured to cause the wearable device 201 to: select a photo based on a user input; generate, based on the selected photo, a user interface including one or more of a layout, a color, one or more complications, or an emoji; and provide a watch face based on the selected photo and the user interface.

In an embodiment, the instructions, when individually or collectively executed by the at least one processor 120, may be configured to cause the wearable device 201 to determine the layout based on an object included in the selected photo, determine the color of the one or more complications based on a color included in the selected photo, generate the one or more complications associated with the object included in the selected photo, and determine the emoji based on the object included in the selected photo.

In an embodiment, the instructions, when individually or collectively executed by the at least one processor 120, may be configured to cause the wearable device 201 to change and display the object or change and display the one or more complications based on periodically acquired stress information when the object included in the selected photo is a face shape.

In an embodiment, the instructions, when individually or collectively executed by the at least one processor 120, may be configured to cause the wearable device 201 to change the background of the object based on periodically acquired location information or change the one or more complications based on the background color when the object included in the selected photo is a face shape.

In an embodiment, the instructions, when individually or collectively executed by the at least one processor 120, may be configured to cause the wearable device 201 to provide an affordance interface to a user to sequentially perform, based on the selected photo, selecting a layout, selecting a color, selecting the one or more complications, and selecting an emoji.

In an embodiment, each of the selecting operations may include an operation selected by artificial intelligence (AI) based on a user's selection.

In an embodiment, the instructions, when individually or collectively executed by the at least one processor 120, may be configured to cause the wearable device 201 to determine whether a user input for automatically configuring the user interface is received, configure the user interfaces based on the user input when the user input for manually configuring the user interface is received, and identify, when configuring each user interface, whether the user interface is automatically configured.

In an embodiment, the instructions, when individually or collectively executed by the at least one processor 120, may be configured to cause the wearable device 201 to collect information and change and display the selected photo and/or the user interface on the watch face based on the collected information, wherein the information includes weather information and biometric information.

In an embodiment, the instructions, when individually or collectively executed by the at least one processor 120, may be configured to cause the wearable device 201 to suggest a change of the watch face and provide a changed watch face when there is a user input accepting the suggestion.

In an embodiment, a computer-readable recording medium may store software for executing instructions that enable performing the watch face providing method.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to the embodiments of the disclosure is not limited to those described above.

It is to be understood that various embodiments of the disclosure and terms for describing the embodiments are not intended to limit the technical features disclosed herein to specific embodiments, and that the embodiments include various modifications, equivalents, or substitutions of the corresponding embodiments. With regard to the description of the drawings, similar reference numerals may be used to refer to similar or related elements. The singular form of a noun corresponding to an item may include one item or a plurality of items unless the context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

The term "module" used in various embodiments of the disclosure may include a unit implemented in hardware, software, or firmware, and may be used interchangeably with terms such as "logic," "logic block," "component," "circuit," or the like. The module may be an integrally configured component or a minimum unit or a portion of the component, which performs one or more functions. For example, according to an embodiment, the module may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" merely means that the storage medium is a tangible device and does not contain a signal (e.g., electromagnetic waves), and this term is not intended to distinguish a case where data is permanently stored on the storage medium and a case where data is temporarily stored.

According to an embodiment, a method according to various embodiments set forth herein may be included and provided in a computer program product. The computer program product may be traded as a product between a seller and a purchaser. The computer program product may be distributed in the form of a machine-readable storage medium (e.g., a compact disc read-only memory (CD-ROM)), or may be directly distributed through an application store (e.g., Play Store^{™}) or directly between two user devices (e.g., smartphones), or may be distributed online (e.g., downloaded or uploaded). If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, the integrated element may perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method of providing a watch face, the method comprising:
selecting a photo based on a user input;
generating, based on the selected photo, a user interface including one or more of a layout, a color, one or more complications, or an emoji; and
providing a watch face based on the selected photo and the user interface.

2. The method of claim 1, wherein the generating of a user interface based on the selected photo comprises:
generating the layout based on an object included in the selected photo;
determining the color of the one or more complications based on a color included in the selected photo;
generating the one or more complications associated with the object included in the selected photo; and
determining the emoji based on the object included in the selected photo.

3. The method of claim 1, wherein the one or more complications includes at least one of exercise, number of steps, or heart rate when the object included in the selected photo is in the form of a running person.

4. The method of claim 1, further comprising:
changing and displaying the object or changing and displaying the one or more complications based on periodically acquired stress information when the object included in the selected photo is a face shape; and
changing the background of the object based on periodically acquired location information or changing the one or more complications based on the background color when the object included in the selected photo is a face shape.

5. The method of claim 1, further comprising providing an affordance interface to a user to sequentially perform, based on the selected photo, selecting a layout, selecting a color, selecting the one or more complications, and selecting an emoji, and
wherein each of the selecting operations includes an operation selected by artificial intelligence (AI) based on a user's selection.

6. The method of claim 1, further comprising:
determining whether a user input for automatically configuring the user interface is received;
providing a watch face based on the selected photo and the user interface when the user input for automatically configuring the user interface is received;
determining whether a user input for manually configuring the user interface is received; and
configuring the user interfaces, based on the user input, when the user input for manually configuring the user interface is received, and identifying, when configuring each user interface, whether the user interface is automatically configured.

7. The method of claim 1, further comprising:
collecting information;
changing and displaying the selected photo and/or the user interface on the watch face based on the collected information;
suggesting a change of the watch face;
providing a changed watch face when there is a user input accepting the suggestion; and
generating the changed watch face based on the photo selected by a user input, and
wherein the information includes weather information and biometric information.

8. A wearable device comprising:
at least one processor;
a display; and
a sensor module; wherein instructions stored in a memory, when individually or collectively executed by the at least one processor, are configured to cause the wearable device to:
select a photo based on a user input;
generate, based on the selected photo, a user interface including one or more of a layout, a color, one or more complications, or an emoji; and
provide a watch face, based on the selected photo and the user interface.

9. The wearable device of claim 8, wherein the instructions, when individually or collectively executed by the at least one processor, are configured to cause the wearable device to:
generate the layout based on an object included in the selected photo;
determine the color of the one or more complications based on a color included in the selected photo;
generate the one or more complications associated with the object included in the selected photo; and
determine the emoji based on the object included in the selected photo.

10. The wearable device of claim 8, wherein the one or more complications includes at least one of exercise, number of steps, or heart rate when the object included in the selected photo is in the form of a running person.

11. The wearable device of claim 8, wherein the instructions, when individually or collectively executed by the at least one processor, are configured to cause the wearable device to:
change and display the object or change and display the one or more complications based on periodically acquired stress information when the object included in the selected photo is a face shape; and
change the background of the object based on periodically acquired location information or change the one or more complications based on the background color when the object included in the selected photo is a face shape.

12. The wearable device of claim 8, wherein the instructions, when individually or collectively executed by the at least one processor, are configured to cause the wearable device to provide an affordance interface to a user to sequentially perform, based on the selected photo, selecting a layout, selecting a color, selecting the one or more complications, and selecting an emoji, and
wherein each of the selecting operations includes an operation selected by artificial intelligence (AI) based on a user's selection.

13. The wearable device of claim 8, wherein the instructions, when individually or collectively executed by the at least one processor, are configured to cause the wearable device to:
determine whether a user input for automatically configuring the user interface is received;
provide a watch face based on the selected photo and the user interface when the user input for automatically configuring the user interface is received; and
configure the user interfaces based on the user input when the user input for manually configuring the user interface is received, and identify, when configuring each user interface, whether the user interface is automatically configured.

14. The wearable device of claim 8, wherein the instructions, when individually or collectively executed by the at least one processor, are configured to cause the wearable device to:
collect information;
change and display the selected photo and/or the user interface on the watch face based on the collected information, wherein the information includes weather information and biometric information;
suggest a change of the watch face; and
provide a changed watch face when there is a user input accepting the suggestion.

15. A computer-readable recording medium storing software for executing instructions that enable performing the watch face providing method described in one of claims 1 to 7.
